# EUROPEAN PATENT SPECIFICATION

(11) **EP 3 353 719 B1**
(45) Date of publication and mention of the grant of the patent: **23.12.2020**
(21) Application number: 16849147.0
(22) Date of filing: 18.07.2016
(51) Int. Cl.: G06N 3/063, G06N 3/04, G06N 3/08

(54) **ELECTRONIC NEURAL NETWORK CIRCUIT HAVING A RESISTANCE BASED LEARNING RULE CIRCUIT**
ELEKTRONISCHE NEURONALE NETZWERKSCHALTUNG MIT EINER WIDERSTANDSBASIERTEN LERNREGELSCHALTUNG
CIRCUIT DE RÉSEAU NEURONAL ÉLECTRONIQUE AYANT UN CIRCUIT DE RÈGLE D'APPRENTISSAGE À RÉSISTANCE

(30) Priority: 23.09.2015 US 201514863138
(43) Date of publication of application: 01.08.2018
(73) Proprietor: Intel Corporation, Santa Clara, CA 95054 (US)
(72) Inventor: AUGUSTINE, Charles, Portland, Oregon 97229 (US); PAUL, Somnath, Hillsboro, Oregon 97124 (US)
(74) Representative: HGF
(86) International application number: PCT/US2016/042839
(87) International publication number: WO 2017/052729

(56) References cited:
- US-A1- 2010 299 297
- US-A1- 2010 312 736
- US-A1- 2014 180 052
- US-A1- 2014 358 834
- US-A1- 2015 178 619
- GIACOMO INDIVERI ET AL: "Integration of nanoscale memristor synapses in neuromorphic computing architectures", CORR (ARXIV), vol. arXiv:1302.7007, 27 February 2013 (2013-02-27), pages 1-22, XP055252364, DOI: 10.1088/0957-4484/24/38/384010
- ANDY THOMAS ET AL: "Tunnel junction based memristors as artificial synapses", FRONTIERS IN NEUROSCIENCE, vol. 9, 7 July 2015 (2015-07-07), XP055575891, DOI: 10.3389/fnins.2015.00241

## Description

### Field of Invention

The field of invention pertains generally to the electronic arts, and, more specifically, to an electronic neural network circuit having a resistance based learning rule circuit.

### Background

In the field of computing science, artificial neural networks may be used to implement various forms of cognitive science such as machine learning and artificial intelligence. Essentially, artificial neural networks are adaptable information processing networks having a design that is structured similar to the human brain and characterized as having a number of neurons interconnected by synapses. Giacomo Indiveri et al: "Integration of nanoscale memristor synapses in neuromorphic computing architectures", arXiv:1302.7007, 27 February 2013 (2013-02-27) discloses an apparatus comprising a semiconductor chip comprising spiking neural network circuitry.

### Figures

A better understanding of the present invention can be obtained from the following detailed description in conjunction with the following drawings, in which:
Fig. 1 shows a neural network;
Figs 2a and 2b show an inhibitory learning rule and an excitory learning rule;
Fig. 3 shows resistance as a function of applied voltage or current for a magnetic tunneling junction device;
Fig. 4 shows a circuit to implement an electronic neural network;
Fig. 5 shows a first example of a learning rule circuit;
Fig. 6 shows a second example of a learning rule circuit;
Fig. 7a shows a different resistance/learning rule profiles as a function of applied voltage or current;
Fig. 7b shows circuitry to effect the different resistance/learning rule profiles of Fig. 7a;
Fig. 8 shows an execution path and a learning path flowing through a same magnetic tunneling junction device;
Fig. 9 shows a computing system.

### Detailed Description

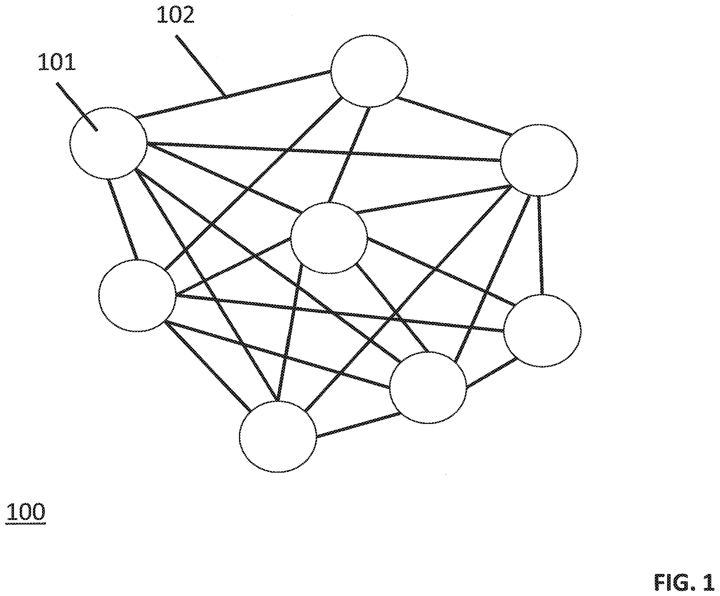

Fig. 1 shows a simplistic depiction of a neural network 100. As observed in Fig. 1, the network includes a plurality of neurons 101 interconnected by a plurality of synapses 102. In operation, the neurons 101 exchange messages between one another through the synapses 102. Each of the synapses 102 has its own particular numeric weight that can be tuned based on experience. As a consequence, the neural network 100 is adaptive and capable of learning.

A class of neural networks referred to as "spiking" neural networks have synaptic messages that take the form of spikes. Here, a neuron "fires" a spike/message to the neurons it is connected to if its state reaches a particular value. Simplistically, the value of a neuron's state will change as it receives spikes/messages from other neurons. If the magnitude of the received spiking activity reaches a certain intensity, the receiving neuron's state may change to a level that causes it to fire.

The weight of a synapse affects the magnitude of the message it transports. Spike Timing Dependent Plasticity (STDP) is a learning function for changing the weight of a synapse in a spiking neural network in response to the spike timing difference on either end of the synapse. There are generally two types of STDP learning functions: inhibitory and excitory. An inhibitory learning function is used for synapses whose messages tend to reduce its receiving neuron's firing activity. By contrast, an excitory learning function is used for synapses whose messages tend to contribute to its receiving neuron's firing activity.

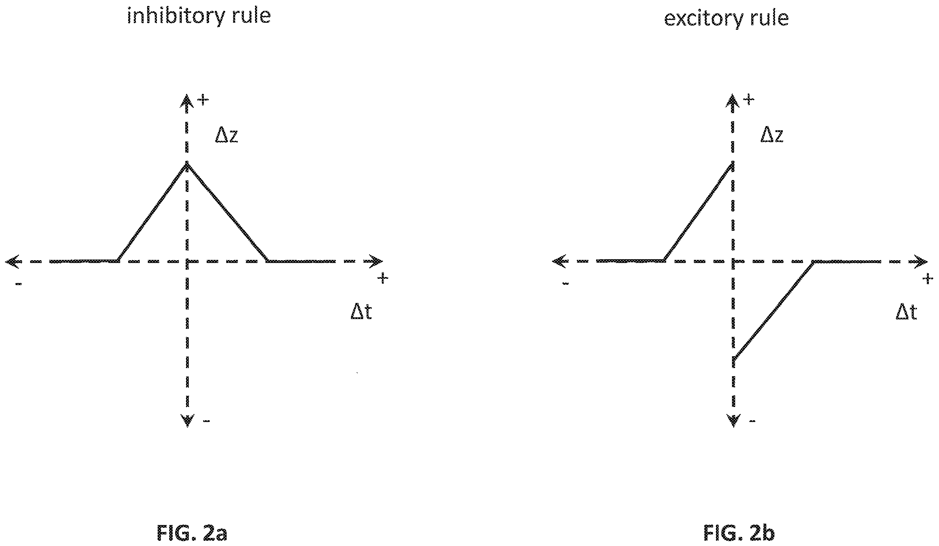

Through application of the learning functions, the weight of a synapse will change in view of the observed pre and post neuron firings which, in turn, corresponds to the learning activity of the network. Fig. 2a shows an STDP inhibitory learning function and Fig. 2b shows an STDP excitory learning function. For both functions, Δt corresponds to the firing time difference between neurons on either side of the synapse while Δz corresponds to the change in synapse weight.

A problem with the implementation and construction of a practical spiking neural network is the sheer number of synapses. Here, note from Fig. 1 that the number of synapses can greatly exceed the number of neurons as a single neuron may be connected to many other neurons. It follows then, given that an intelligence level of some critical mass typically requires a large number of neurons, that the number of synapses required to implement a practical spiking neural network may be extreme (e.g., one hundred or one thousand times the number of neurons).

The manufacture of a semiconductor chip whose constituent circuitry is designed to implement a spiking neural network therefore faces the challenge of attempting to implement a synapse with a reduced number of active devices so as to reduce its overall size and manufacturing complexity.

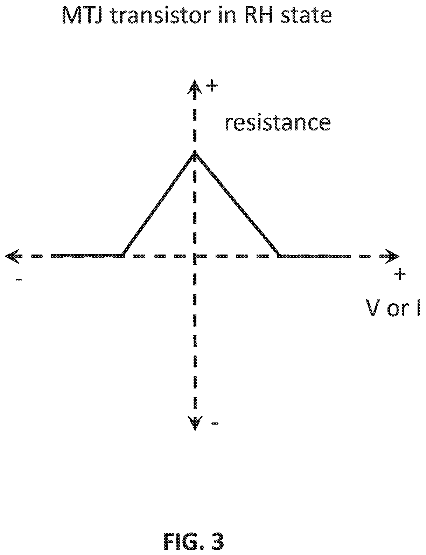

A solution to the problem described in the Background is to construct a synapse circuit with a magnetic tunneling junction (MTJ) device. A magnetic tunneling device exhibits high or low resistance depending on the relative orientation of two magnetic moments within the device. Here, according to one type of MTJ implementation, when a first magnetic layer of the device (e.g., a fixed layer) has a magnetic moment that points in the same direction as a second magnetic layer of the device (e.g., a free layer), the device has low resistance (RL). By contrast, referring to Fig. 3, when the first magnetic layer has a magnetic moment that points in the opposite direction as the second magnetic layer, the MTJ device has high resistance (RH). In various implementations, the magnetic moment of the fixed layer does not change direction but the magnetic moment of the free layer does change direction.

As observed in Fig. 3, the high resistance state of an MTJ device will exhibit a change in resistance as a function of applied voltage or current that is very similar to the shape of an inhibitory STDP learning function of Fig. 2a. Thus, if the voltage or current that is applied to a high resistance state MTJ device is representative of the timing difference between neurons in a neural network, the resistance of the MTJ device can be used to establish the change in weight of the synapse between them. That is, the MTJ device can be used to implement the inhibitory learning rule.

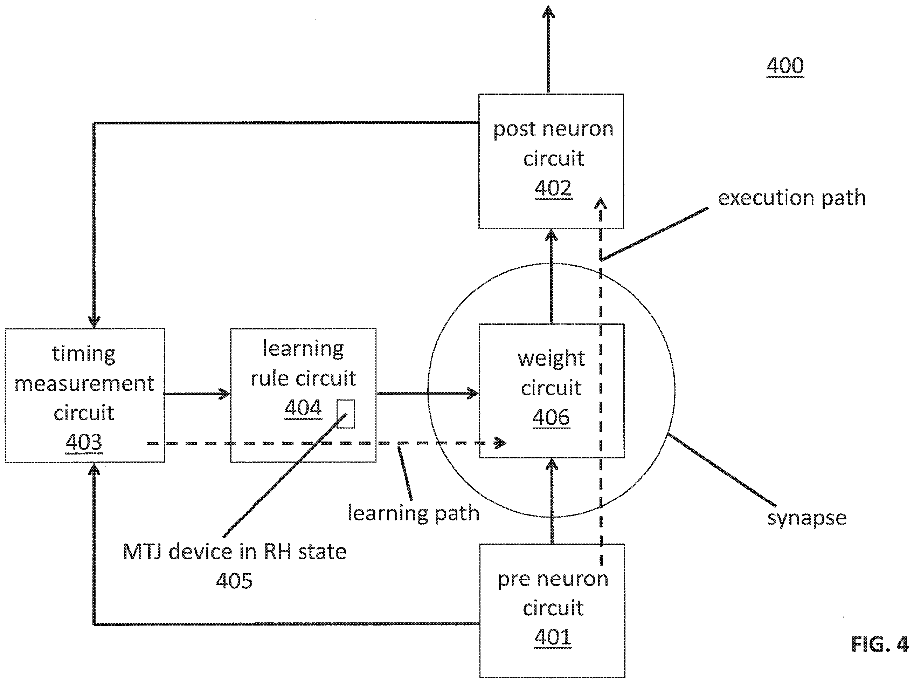

Fig. 4 shows a generic neural network circuit 400 having first and second circuits 401, 402 that implement first and second neurons. In various examples, the neuron circuits include circuitry to maintain some kind of state (e.g., a register, a flip-flop, a capacitor, etc.) and circuitry to fire a message if the state reaches a certain level.

A timing measurement circuit 403 measures the difference between firing times of the two neuron circuits 401, 402 and generates an output signal (e.g., a digital signal, a voltage or current) that is representative, in terms of the magnitude and polarity, of the firing time difference. Specifically, if the post neuron fires 402 after the pre neuron 401 (where the spike/message propagates from the pre neuron 401 to the post neuron 402 along an execution path), Δt is positive and the timing circuit 403 will generate a signal of a first polarity (e.g., positive) whose magnitude is representative of the difference in time.

The signal is then applied to learning circuit 404 having an MTJ device 405 in the high resistance state. The input signal from the timing measurement circuit 404 is processed by the learning rule circuit 404 in a manner that causes a representative signal to be applied to the MTJ device 405 and the resistance of the device is measured.

For example, if a voltage that is representative of Δt is applied across the MTJ device's terminals, the resultant current that flows through the MTJ device is measured to determine the MTJ device's resistance. Likewise, if a current that is representative of Δt is driven through the MTJ, device the resultant voltage across the MTJ device is measured to determine the device's resistance. The measured resistance is then used to generate an input signal to a weight circuit 406.

Here, recall that the measured resistance of the MTJ device represents a change in the weight of the synapse between the two neurons 401, 402. In response to the input signal received from the learning rule circuit 404, a weight circuit 406 calculates a new weight value for the synapse. Messages may then continue to proceed from the pre-neuron to the post-neuron along an execution path through the weight circuit 406 so as to apply the new weight to the message. A new weight may therefore be applied for the synapse each time the timing measurement circuit sends a new signal along the learning path.

In various examples, the learning rule circuit 404 may implement an inhibitory or excitory rule depending on an input control signal provided as a value from a register (not shown). Here, the value in the register may be loaded as part of the configuration of the neural network circuit.

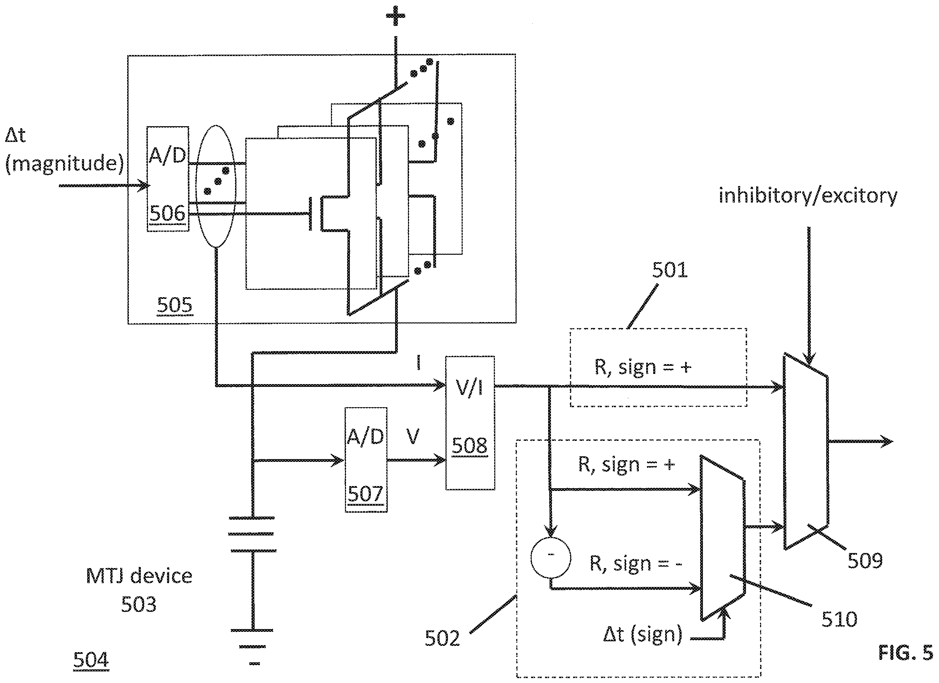

Fig. 5 shows an example of a learning rule circuit 504. Here, referring briefly back to Figs. 2a and 2b, note that excitory function of Fig. 2b can be viewed as the inhibitory function of Fig. 2a but with the slight modification that the polarity is reversed for positive time differences. That is, to the left of the origin along the horizontal axis, the rules of Figs. 2a and 2b are the same. By contrast, to the right of the origin along the horizontal axis, the rule of Fig. 2b has the same magnitude but opposite polarity as Fig. 2a.

Referring to Fig. 5, circuitry 501 implements the inhibitory synapse for the learning rule circuit 504 while circuitry 502 implements the excitory synapse for the learning rule circuit 504. That is, if the learning rule circuit 504 is to implement an inhibitory learning rule, channel 501 is selected by multiplexer 509. By contrast, if the learning rule circuit 504 is to implement an excitory learning rule, channel 502 is selected by multiplexer 509. Recall that, e.g., a value in a register, may establish the appropriate learning rule and provide an input signal to the learning rule circuit to indicate which learning rule is to be applied.

According to the learning rule circuit of Fig. 5, the resistance of the MTJ device 503 is measured by driving a current through the device 503, measuring the voltage across the device 503 with an A/D converter 507 and dividing the measured voltage by the measured current with logic circuit 508 (other embodiments may choose to apply a voltage to the device and measure the current through it). Note that the MTJ curve of Fig. 3 is symmetric across the horizontal axis. That is, an MTJ device demonstrates a particular resistance regardless of the polarity of the applied voltage or current. As such, current source circuitry 505 only drives current in one direction irrespective of the polarity of the Δt measurement.

Current source circuitry 505 therefore accepts an input that indicates the magnitude of the time difference between the pre and post neurons (e.g., as provided by timing measurement circuit 403 of Fig. 4) and drives a current through the MTJ device 503 that is proportional to the Δt magnitude. The Δt magnitude input signal causes a number of drive current transistors to be turned on (for larger magnitude time differences more drive current transistors are turned on to drive more current, for smaller magnitude time differences fewer drive current transistors are turned on to drive less current). An analog to digital converter 506 that receives the Δt magnitude input signal converts the signal into a number of bits (e.g., in thermometer code) to turn on the appropriate number of drive current transistors.

The polarity of the time difference measurement has no effect on an inhibitory learning rule output. Thus the inhibitory learning channel 501 is just a straight read of the MTJ device resistance. In an example, the resistance of the MTJ device, as provided by logic circuit 508, is taken to be a value having positive polarity.

By contrast, the polarity of the time difference measurement does have an effect on the excitory learning rule output. Specifically, in the case of a negative Δt measurement, the output resistance is positive and is therefore just the output of logic circuit 508. By contrast, in the case of a positive Δt measurement, the output value of the learning rule is negative and the correct output is the value of the resistance from logic circuit but having a negative polarity. As such, excitory channel includes two subchannels, one that provides positive resistance and one that provides negative resistance. Multiplexer 510 selects the positive sub-channel in the case of a negative Δt measurement and selects the negative sub-channel in the case of a positive Δt measurement.

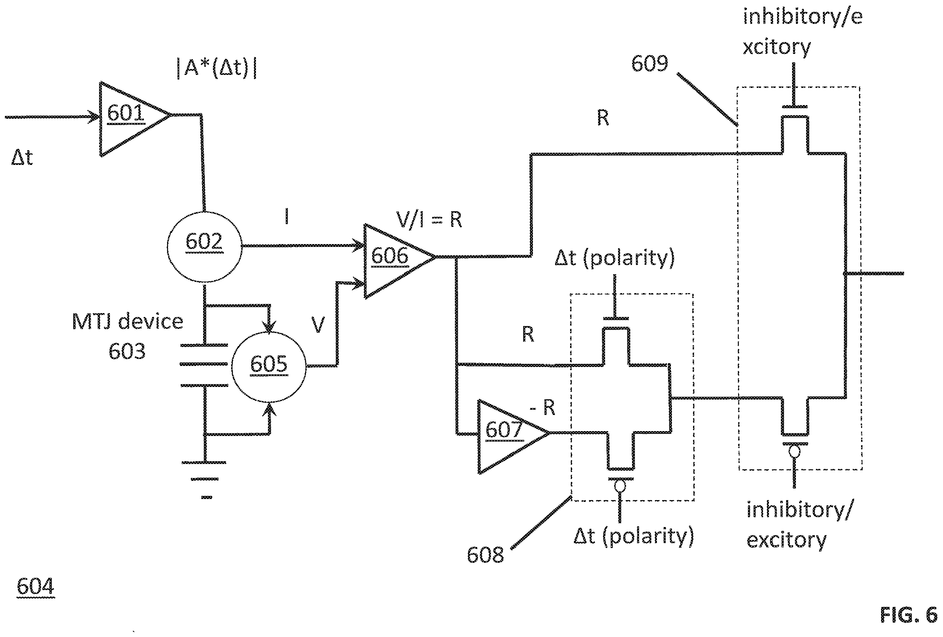

Fig. 5 provided an example of a mixed signal learning rule circuit that included both analog and digital signal processing features. By contrast Fig. 6 shows an example of an analog learning rule circuit 604. Here, an analog input signal Δt is received that indicates both the magnitude and polarity of the time difference measurement. The Δt time difference input signal is provided to a rectifying amplifier 601 that provides the absolute value of the magnitude of Δt factored by a constant A (A may be unity).

As such, as the magnitude of the time difference (Δt) increases, the amount of voltage applied to the MTJ device 603 increases. A current meter circuit 602 measures the current through the MTJ device 603 while a voltage meter circuit 605 measures the current through the MTJ device 603. A division circuit 606 receives the outputs of the current and voltage meters 602, 605 and determines the resistance of the MTJ circuit (V/I = R).

A pair of switching circuits 608, 609 provide the output of the learning rule circuit as a function of: 1) a control signal (e.g., as provided by configuration register) that indicates whether the inhibitory or excitory learning rule is to be effected; and, 2) the polarity of the Δt time difference signal. In the example of Fig. 6 if the control signal indicates that the inhibitory learning rule is to be applied, then, the NFET device of switch 609 is "on" and the PFET device of switch 609 is "off". In this state, the positive polarity output of the division circuit 606 is fed directly to the learning circuit output irrespective of the polarity of the Δt measurement signal.

By contrast, if the control signal indicates that the excitory rule is to be applied, the NFET device of switch 609 is "off" and the PFET device of switch 609 is "on". In this state, the output of the learning circuit is either the positive polarity output of the division circuit 606 (if Δt is positive the NFET of switch 608 is "on" and the PFET of switch 608 is "off"), or, a negative polarity output of the division circuit 606 as crafted by a unity inverting amplifier 607 (if Δt is negative the NFET of switch 608 is "off" and the PFET of switch 608 is "on"). For simplicity, a pass gate structure 609 has been shown for illustrative ease. To avoid a voltage drop issues across the gate structure a transmission gate structure may be used in place of the pass gate structure 609.

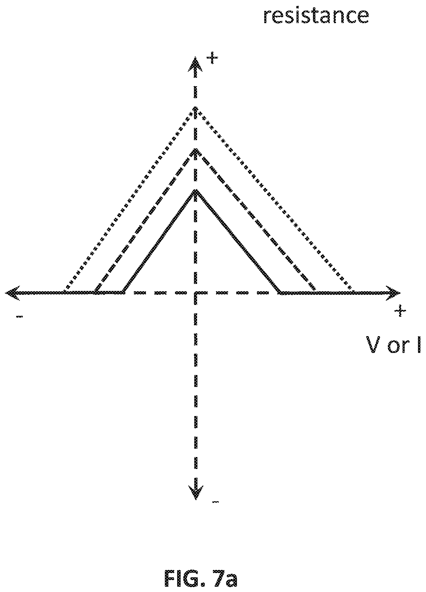

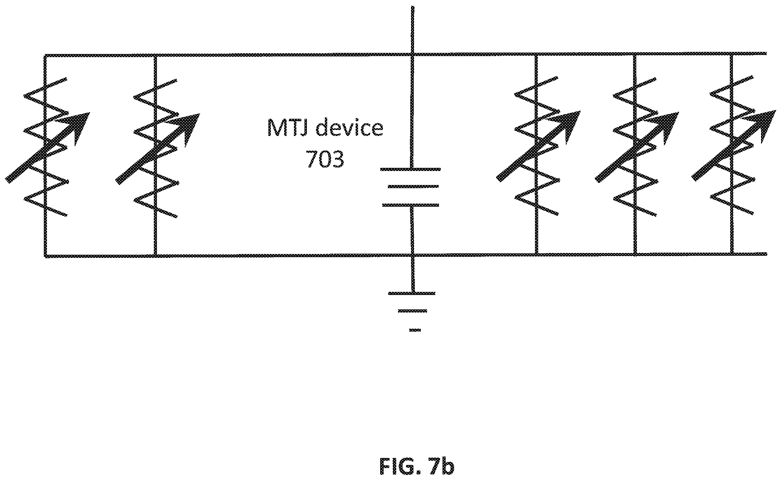

An implementation improvement on the circuitry of Figs. 5 and 6 is the ability to change the slope and amplitude of the learning rule in a programmable fashion. Here, Fig. 7a shows different inhibitory rule profiles as characterized by the different linear slopes and vertical axis intercepts of the resistance through the MTJ resistor nodes. Various implementations may desire different height/sloped learning rules thus the ability to change the learning rule profile (in terms of its height and slope) may be desirable. Fig. 7b depicts an improvement that can be applied to either of the circuits of Figs. 5 or 6 in order to effect a programmable height and slope to the learning curve that the circuit implements. Here, by placing programmable resistances in parallel with the MTJ device, the effective resistance through the MTJ device can be adjusted to effect learning rules of various slopes and heights.

In an example, each of the various parallel resistances have two programmable states: open circuit or resistance R. When in the open circuit state a parallel resistance has no effect on the circuit. When activated in the resistance R state, however, a parallel resistance reduces the resistance of the MTJ device, which, in turn, reduces the slope of the learning rule and its vertical axis intercept. Each parallel resistance is individually set in the open/R state so as to permit a wide range of different learning rule slopes by activating/inactivating different combinations of parallel resistances. The more parallel resistances that are activated, the more the slope and height of the circuit's learning rule is reduced. Other examples may choose to implement programmable resistance ranges (e.g., each resistance can be set to any one of open circuit, maximum resistance R and a number of resistance values between open and R). Conceivably similar changes to the shape of the resistance/rule curve can be implemented by placing programmable resistance values in series with the MTJ. We can also have an implementation where programmable resistances can be replaced MTJs to enable learning function with different height(s) and slope(s).

Referring back to Fig. 4, note that the basic model for the neural network includes a learning rule circuit 404 that feeds a change in weight input value to a weight circuit 406. The output of the learning rule circuit, which determines the change in weight, is established by way of a learning path. The actual use of the weight with the change in weight occurs when a pre-neuron fires a message to a post neuron along an execution path. As observed in Fig. 4, the learning path and learning rule circuit are essentially isolated from the execution path and the weight circuit.

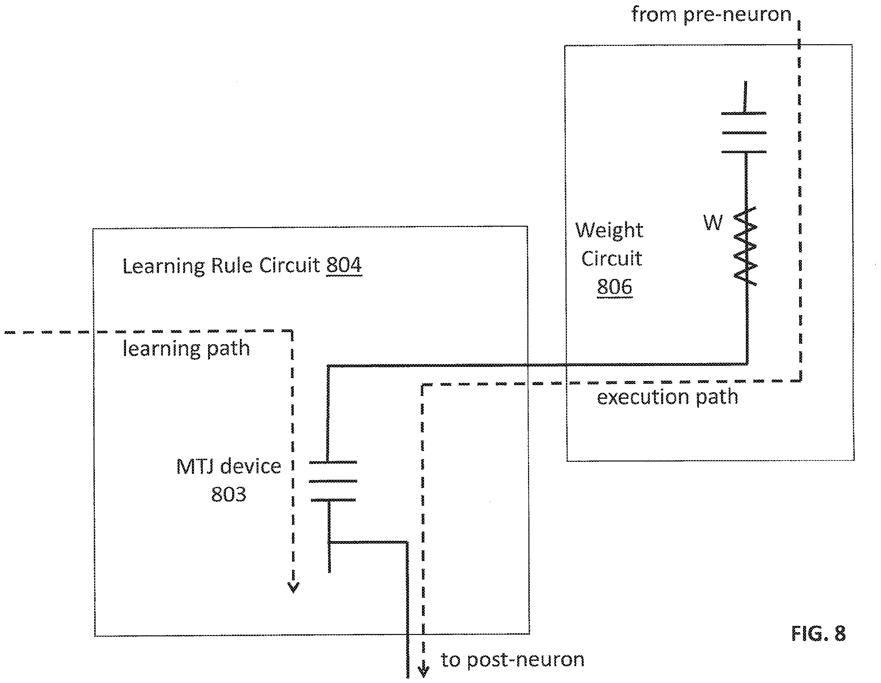

Fig. 8 shows another improvement that can potentially be accomplished with an MTJ device based learning rule implementation. According to the design philosophy of Fig. 8, because the change in weight is established as the resistance of an MTJ device 803, if the weight itself W is also established as a resistance, then, the execution path can flow directly through the MTJ 803. In this case, both the learning and execution paths will flow through the MTJ 803. Here, as observed in Fig. 8, the weight circuit 806 sets the base weight with a resistance of value W. The execution path then flows through resistance W and the MTJ 803 to affect both the weight and the change in weight.

Although examples above have been described in reference to an MTJ, in various other examples another type of resistive element may be utilized in place of the MTJ as described above. Here, any resistive device that has the property of voltage dependent resistance with certain slope and height can be used for STDP learning.

The neural network circuitry discussed herein may be embodied in various semiconductor circuits at least some of which may be integrated with a computing system (such as an intelligent machine learning peripheral such as a voice or image recognition peripheral).

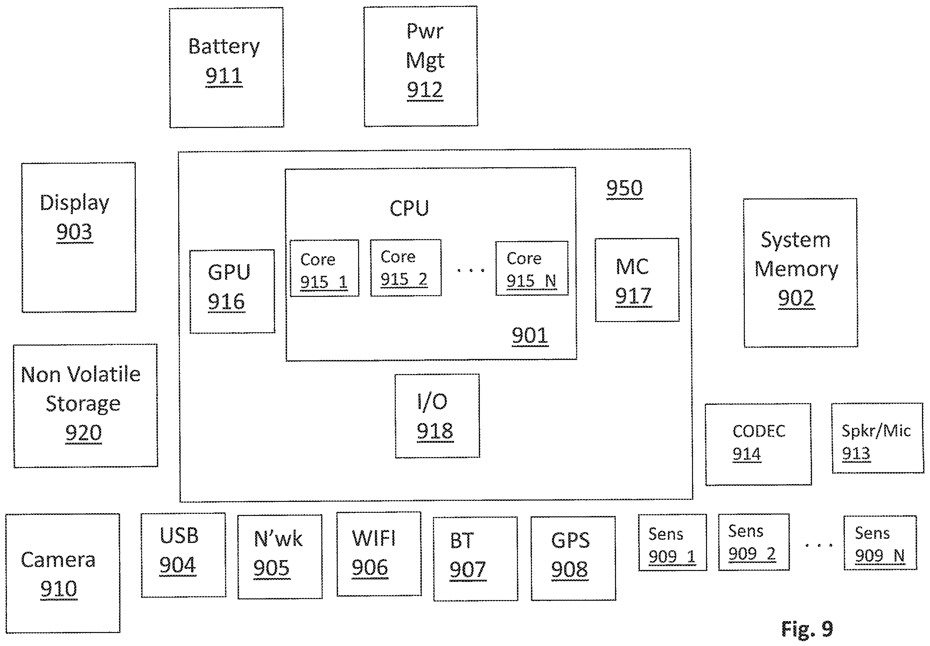

Fig. 9 shows a depiction of an exemplary computing system 900 such as a personal computing system (e.g., desktop or laptop) or a mobile or handheld computing system such as a tablet device or smartphone. As observed in Fig. 9, the basic computing system may include a central processing unit 901 (which may include, e.g., a plurality of general purpose processing cores and a main memory controller disposed on an applications processor or multi-core processor), system memory 902, a display 903 (e.g., touchscreen, flat-panel), a local wired point-to-point link (e.g., USB) interface 904, various network I/O functions 905 (such as an Ethernet interface and/or cellular modem subsystem), a wireless local area network (e.g., WiFi) interface 906, a wireless point-to-point link (e.g., Bluetooth) interface 907 and a Global Positioning System interface 908, various sensors 909_1 through 909_N (e.g., one or more of a gyroscope, an accelerometer, a magnetometer, a temperature sensor, a pressure sensor, a humidity sensor, etc.), a camera 910, a battery 911, a power management control unit 912, a speaker and microphone 913 and an audio coder/decoder 914. Any of sensors 901_1 through 909_N as well as the camera 910 may include neural network semiconductor chip circuitry having MTJ learning rule circuitry described above.

An applications processor or multi-core processor 950 may include one or more general purpose processing cores 915 within its CPU 901, one or more graphical processing units 916, a memory management function 917 (e.g., a memory controller) and an I/O control function 918. The general purpose processing cores 915 typically execute the operating system and application software of the computing system. The graphics processing units 916 typically execute graphics intensive functions to, e.g., generate graphics information that is presented on the display 903. The memory control function 917 interfaces with the system memory 902. The power management control unit 912 generally controls the power consumption of the system 900.

Each of the touchscreen display 903, the communication interfaces 904 - 907, the GPS interface 908, the sensors 909, the camera 910, and the speaker/microphone codec 913, 914 all can be viewed as various forms of I/O (input and/or output) relative to the overall computing system including, where appropriate, an integrated peripheral device as well (e.g., the camera 910). Depending on implementation, various ones of these I/O components may be integrated on the applications processor/multi-core processor 950 or may be located off the die or outside the package of the applications processor/multi-core processor 950.

Examples of the invention may include various processes as set forth above. The processes may be embodied in machine-executable instructions. The instructions can be used to cause a general-purpose or special-purpose processor to perform certain processes. Alternatively, these processes may be performed by specific hardware components that contain hardwired logic for performing the processes, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, FLASH memory, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

## Claims

1. An apparatus, comprising:
a semiconductor chip comprising spiking neural network circuitry, said spiking neural network circuitry comprising:
a first neuron circuit;
a second neuron circuit;
a synapse coupled between the first and second neuron circuits;
a timing measurement circuit which measures a difference between firing times of the first and second neuron circuits and generates an output signal that indicates an amount of time between respective firings of said first and second neurons;
a learning rule circuit, said learning rule circuit configured to receive the output signal of the timing measurement circuit and an input control signal to indicate a learning rule to be applied; and
a weight circuit;
wherein the learning rule circuit further comprising a resistive element that exhibits a change in resistance as a function of applied voltage or current, the applied voltage or current generating a resultant current through or voltage across the resistive element, the learning rule circuit configured to:
drive a signal proportional to a magnitude of the amount of time between respective firings of said first and second neurons through the resistive element; and
generate an output signal indicating a change in a weight of the synapse based on a resistance of said resistive element and said input control signal;
wherein the weight circuit calculates a new weight for the synapse based on the output of the learning rule circuit; and
wherein the resistive element is a magnetic tunneling junction device.

2. The apparatus of claim 1 wherein said learning rule circuit is to implement at least one of:
an inhibitory rule;
an excitory rule.

3. The apparatus of claim 2 wherein said learning rule circuit is a mixed signal circuit.

4. The apparatus of claim 2 wherein said learning rule circuit is an analog circuit.

5. The apparatus of claim 1 further comprising one or more programmable resistances coupled to said resistive element.

6. The apparatus of claim 1 wherein a learning path and an execution path flow through said resistive element.

7. The apparatus according to claim 1 wherein the apparatus is a computing system.

## Patentansprüche

1. Vorrichtung, die aufweist:
einen Halbleiterchip, der eine Schaltungsanordnung für gepulste neuronale Netze aufweist, wobei die Schaltungsanordnung für gepulste neuronale Netze aufweist:
eine erste Neuronenschaltung;
eine zweite Neuronenschaltung;
eine Synapse, die zwischen der ersten und zweiten Neuronenschaltung gekoppelt ist;
eine Zeitmessschaltung, die eine Differenz zwischen Feuerzeiten der ersten und zweiten Neuronenschaltung misst und ein Ausgangssignal erzeugt, das eine Menge der Zeit zwischen jeweiligen Feuervorgängen der ersten und zweiten Neuronen angibt;
eine Lernregelschaltung, wobei die Lernregelschaltung dazu ausgebildet ist, das Ausgangssignal der Zeitmessschaltung und ein Eingangssteuersignal zu erhalten, um eine anzuwendende Lernregel anzugeben; und
eine Gewichtungsschaltung;
wobei die Lernregelschaltung ferner ein Widerstandselement aufweist, das eine Änderung des Widerstands als eine Funktion der angelegten Spannung oder des Stroms zeigt, wobei die angelegte Spannung oder der Strom einen resultierenden Strom durch das Widerstandselement oder eine Spannung an dem Widerstandselement erzeugt, wobei die Lernregelschaltung dazu ausgebildet ist:
ein Signal proportional zu einer Größe der Menge der Zeit zwischen jeweiligen Feuervorgängen der ersten und zweiten Neuronen durch das Widerstandselement zu treiben; und
ein Ausgangssignal zu erzeugen, das eine Änderung in einer Gewichtung der Synapse angibt, auf Grundlage eines Widerstands des Widerstandselements und des Eingangssteuersignals;
wobei die Gewichtungsschaltung ein neues Gewicht für die Synapse auf Grundlage der Ausgabe der Lernregelschaltung berechnet; und
wobei das Widerstandselement eine Magnettunnelübergangs(en: magnetic tunneling junction)-Vorrichtung ist.

2. Vorrichtung nach Anspruch 1, wobei die Lernregelschaltung dafür vorgesehen ist, mindestens eine der folgenden zu implementieren:
eine hemmende Regel;
eine erregende Regel;

3. Vorrichtung nach Anspruch 2, wobei die Lernregelschaltung eine Mixed-Signal-Schaltung ist.

4. Vorrichtung nach Anspruch 2, wobei die Lernregelschaltung eine Analogschaltung ist.

5. Vorrichtung nach Anspruch 1, die ferner einen oder mehrere programmierbare Widerstände aufweist, die mit dem Widerstandselement gekoppelt sind.

6. Vorrichtung nach Anspruch 1, wobei ein Lernpfad und ein Ausführungspfad durch das Widerstandselement laufen.

7. Vorrichtung nach Anspruch 1, wobei die Vorrichtung ein Rechensystem ist.

## Revendications

1. Appareil, comprenant :
une puce à semi-conducteur comprenant un circuit de réseau de neurones à impulsions, ledit circuit de réseau de neurones à impulsions comprenant :
un premier circuit neuronal ;
un second circuit neuronal ;
une synapse couplée entre les premier et second circuits neuronaux ;
un circuit de mesure de temps qui mesure une différence entre les temps de déclenchement des premier et second circuits neuronaux et génère un signal de sortie qui indique une quantité de temps entre les déclenchements respectifs desdits premier et second neurones ;
un circuit de règle d'apprentissage, ledit circuit de règle d'apprentissage étant configuré pour recevoir le signal de sortie du circuit de mesure de temps et un signal de commande d'entrée pour indiquer une règle d'apprentissage à appliquer ; et
un circuit de pondération ;
où le circuit de règle d'apprentissage comprend en outre un élément résistif qui présente un changement de résistance en fonction de la tension ou du courant appliqué, la tension ou le courant appliqué générant un courant ou une tension résultant à travers l'élément résistif, le circuit de règle d'apprentissage étant configuré pour :
commander un signal proportionnel à l'importance de la quantité de temps entre les déclenchements respectifs desdits premier et second neurones à travers l'élément résistif ; et
générer un signal de sortie indiquant un changement de poids de la synapse sur la base d'une résistance dudit élément résistif et dudit signal de commande d'entrée ;
où le circuit de pondération calcule un nouveau poids pour la synapse sur la base de la sortie du circuit de règle d'apprentissage ; et
où l'élément résistif est un dispositif magnétique à jonction par effet tunnel.

2. Appareil selon la revendication 1, dans lequel ledit circuit de règle d'apprentissage doit mettre en œuvre au moins l'une des règles suivantes :
une règle inhibitrice ;
une règle excitatrice.

3. Appareil selon la revendication 2, dans lequel ledit circuit de règle d'apprentissage est un circuit à signaux mixtes.

4. Appareil selon la revendication 2, dans lequel ledit circuit de règle d'apprentissage est un circuit analogique.

5. Appareil selon la revendication 1, comprenant en outre une ou plusieurs résistances programmables couplées audit élément résistif.

6. Appareil selon la revendication 1, dans lequel un chemin d'apprentissage et un chemin d'exécution traversent ledit élément résistif.

7. Appareil selon la revendication 1, dans lequel l'appareil est un système informatique.
